Europäisches Patentamt

European Patent Office

Office européen des brevets

(19)

(11) Numéro de publication: **0 057 123 B1**

(12) # FASCICULE DE BREVET EUROPEEN

(45) Date de publication du fascicule du brevet:
**23.11.83**

(21) Numéro de dépôt: **82400058.2**

(22) Date de dépôt: **13.01.82**

(51) Int. Cl.³: **F 04 C 2/107**, F 04 C 15/00 //
F16D1/08

(54) Moyens d'accouplement du rotor d'une pompe monovis.

(30) Priorité: **19.01.81 FR 8100904**

(43) Date de publication de la demande:
**04.08.82 Bulletin 82/31**

(45) Mention de la délivrance du brevet:
**23.11.83 Bulletin 83/47**

(84) Etats contractants désignés:
**DE GB**

(56) Documents cités:
**FR - A - 671 534**
**FR - A - 1 572 779**
**FR - A - 2 398 925**
**US - A - 3 346 937**
**US - A - 3 600 113**

(73) Titulaire: **SOCIETE GENERALE DE MECANIQUE ET DE METALLURGIE, 17, rue Ernest-Laval, F-92170 Vanves (FR)**

(72) Inventeur: **Chanton, Edmond, 31, Avenue Schneider, F-92140 Clamart (FR)**

(74) Mandataire: **Gorree, Jean-Michel et al, Cabinet Plasseraud 84, rue d'Amsterdam, F-75009 Paris (FR)**

ACTORUM AG

Moyens d'accouplement du rotor d'une pompe monovis.

La présente invention concerne des perfectionnements apportés aux pompes à engrenage dites pompe Moineau, comprenant un stator présentant une cavité axiale, un rotor hélicoïdal apte à tourner dans ladite cavité du stator en coopérant avec elle et des moyens d'accouplement pour accoupler le rotor à un autre organe tournant, moteur ou entraîné. Une telle pompe est décrit, par exemple, dans le document US-A-3,600,113.

Dans certaines pompes dont le rotor possède une dimension transversale relativement faible avec une ondulation d'hélice de profondeur relativement importante, la partie du rotor utile pour la transmission du couple – c'est-à-dire la région centrale cylindrique de révolution enveloppée par les fonds d'ondulation – possède un rayon trop faible et n'offre donc pas une résistance mécanique suffisante compte tenu du couple qu'elle doit transmettre. Il en résulte qu'il n'est alors pas possible d'accoupler le rotor à un autre organe tournant (tel qu'un organe d'entraînement en rotation) de la façon habituelle, c'est-à-dire en prévoyant un flasque d'accouplement en bout du rotor.

L'invention a essentiellement pour but de remédier à cet inconvénient et de prévoir un accouplement entre le rotor et un autre organe tournant qui, dans le cas considéré, écarte tout risque de rupture du rotor.

A ces fins, on prévoit, conformément à l'invention, que le rotor hélicoïdal fait saillie axialement hors du stator et que les moyens d'accouplement comprennent un manchon d'accouplement rigide et allongé, évidé d'un logement axial dont la forme est complémentaire de celle de l'hélice du rotor, ledit manchon étant engagé sur et enserrant l'extrémité du rotor saillant hors du stator.

Grâce à cet agencement, le couple transmis entre l'organe tournant et le rotor, notamment le couple moteur d'entraînement du rotor, est appliqué au rotor à la périphérie de celui-ci, sur toute sa surface externe enserrée par le manchon d'accouplement: c'est donc la totalité de la zone du rotor enserrée par le manchon d'accouplement qui est sollicitée, et non plus seulement la région centrale cylindrique enveloppée par les fonds d'ondulation.

D'autre part, on profite de la présence de l'hélice du rotor pour solidariser rigidement par vissage de l'un dans l'autre l'extrémité saillante du rotor et le manchon.

Toutefois, compte tenu de la forme relativement complexe de l'hélice du rotor, on prévoit, pour faciliter la mise en place du manchon sur l'extrémité saillante du rotor, que le manchon soit muni d'une fente s'étendant radialement entre le logement axial évidé dans ce manchon et la face latérale externe dudit manchon, et de moyens de serrage tendant à rapprocher les deux faces qui délimitent ladite fente de façon à serrer élastiquement le manchon autour de l'extrémité considérée du rotor.

Il est ainsi possible d'enfiler le manchon sur le rotor en le vissant librement sur celui-ci, puis de le bloquer en position à l'aide des moyens de serrage.

Pour obtenir un blocage suffisant du manchon sur le rotor, de préférence le manchon s'étend sur au moins un pas de l'hélice du rotor.

Toujours dans le but d'assurer le blocage mutuel du rotor et du manchon, même lors de la transmission de couples importants, on prévoit que le logement axial du manchon d'accouplement est obturé par une paroi frontale du côté de l'extrémité libre de celui-ci, et que l'extrémité du rotor est en butée contre ladite paroi frontale.

Pour parfaire encore la liaison entre le rotor et le manchon, on prévoit des moyens de liaison supplémentaires pour solidariser l'un à l'autre l'extrémité du rotor et le manchon, lesdits moyens comprenant avantageusement au moins une vis traversant la paroi frontale d'extrémité du manchon et vissée axialement dans l'extrémité du rotor.

Dans un mode de réalisation préféré du dispositif de l'invention, le manchon fait partie intégrante d'un dispositif d'accouplement, notamment d'un dispositif d'accouplement à la cardan.

L'invention sera mieux comprise à la lecture de la description qui suit d'un de ses modes de réalisation préférés donné uniquement à titre d'exemple illustratif; dans cette description, on se réfère au dessin annexé sur lequel:

– la figure 1 est une vue schématique partielle et de côté, en coupe, d'une pompe à engrenage agencée conformément à l'invention, et

– la figure 2 est une vue en coupe transversale selon la ligne II-II de la figure 1.

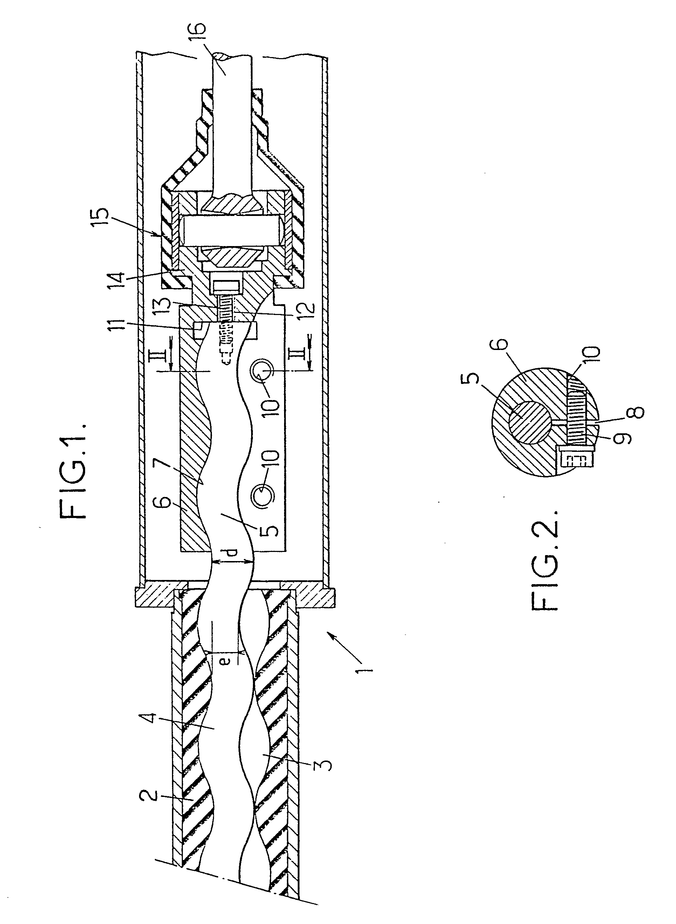

Comme représenté à la figure 1, la pompe à engrenage ou pompe Moineau 1 comprend de façon classique un stator 2 évidé axialement par une cavité 3 enroulée selon une double hélice et un rotor hélicoïdal 4 enroulé selon une hélice simple et disposé dans la cavité 3 du stator 2.

Lorsque la dimension transversale ou diamètre d du rotor est relativement faible et que simultanément la profondeur de l'ondulation de l'hélice du rotor est relativement importante, la partie du rotor utile à la transmission des efforts – c'est-à-dire la région centrale cylindrique de révolution de diamètre e enveloppée par les fonds des ondulations – est de diamètre trop faible et donc trop peu résistante.

Selon l'invention, le rotor 4 se prolonge au-delà du stator par une extrémité 5 en tout point identique à la partie du rotor 4 logée dans la cavité 3, c'est-à-dire que l'hélice du rotor se continue sur l'extrémité saillante 5.

Autour de l'extrémité saillante 5 du rotor est disposé un manchon métallique 6, par exemple extérieurement cylindrique de révolution, et evi- dé intérieurement par un logement axial 7 de forme parfaitement complémentaire de celle du rotor, c'est-à-dire que le logement 7 est creusé suivant une hélice de même caractéristique que celle du rotor 4. Pour obtenir une bonne solidarisation du manchon sur le rotor, il est souhaitable que le manchon s'étende, axialement, sur au moins un pas de l'hélice du rotor.

Ainsi, les efforts sont transmis par la surface extérieure du rotor et non plus simplement par sa région centrale, ce qui permet, sans modifier les caractéristiques du rotor, d'accroître la limite des efforts transmissibles.

En outre, pour faciliter la mise en place du manchon sur le rotor ou son démontage, on prévoit que le manchon soit fendu longitudinalement par une fente radiale 8 débouchant, d'un côté, sur la face externe du manchon et, de l'autre côté, dans le logement 7, les deux bords en regard de la fente 8 étant légèrement écartés élastiquement l'un de l'autre; une fois le manchon mis en place sur l'extrémité 5, le manchon peut être amené à serrer fortement le rotor sous l'action de moyens de serrage appropriés, par exemple des boulons 9 engagés dans des trous filetés transversaux 10 creusés dans le manchon.

Pour améliorer encore la solidité de la liaison entre rotor et manchon, on prévoit des moyens de liaison complémentaires. A cette fin, l'extrémité du manchon 6 située en regard de l'extrémité libre du rotor 4 est fermée par une paroi frontale 11 contre la face intérieure de laquelle prend appui l'extrémité libre du rotor. Cette paroi frontale 11 est en outre percée d'un trou axial 12 traversé par un boulon ou une vis 13 vissé axialement dans le rotor 4.

Bien entendu, le manchon 6 peut être agencé de toute manière appropriée en vue d'être accouplé à un organe voisin.

Par exemple, comme représenté à la figure 1, le manchon 6 est constitué d'une seule pièce avec une partie de tête 14 d'un accouplement à la cardan 15 en vue d'une liaison de rotation avec un autre organe tournant tel qu'un arbre moteur 16 ou un autre rotor de pompe Moineau.

**Revendications**

1. Pompe à engrenage du type pompe Moineau comprenant un stator (2) présentant une cavité axiale (3), un rotor hélicoïdal (4) apte à tourner dans ladite cavité du stator en coopérant avec elle et des moyens d'accouplement pour accoupler le rotor à un autre organe tournant, moteur ou entraîné, caractérisée en ce que le rotor hélicoïdal (4) fait saillie axialement hors du stator (2) et en ce que les moyens d'accouplement comprennent un manchon d'accouplement (6) rigide et allongé, évidé d'un logement axial (7) dont la forme est complémentaire de celle de l'hélice du rotor, ledit manchon (6) étant engagé sur et enserrant l'extrémité (5) du rotor saillant hors du stator.

2. Pompe à engrenage selon la revendication 1, caractérisée en ce que le manchon est muni d'une fente (8) s'étendant radialement entre le logement axial évidé dans ce manchon et la face externe dudit manchon, et en ce qu'il est prévu des moyens de serrage (9, 10) tendant à rapprocher les deux faces qui délimitent ladite fente de façon à serrer élastiquement le manchon (6) autour de l'extrémité (5) du rotor.

3. Pompe à engrenage selon l'une quelconque des revendications 1 et 2, caractérisée en ce que le manchon (6) s'étend sur au moins un pas de l'hélice du rotor (4).

4. Pompe à engrenage selon l'une quelconque des revendications 1 à 3, caractérisée en ce que le logement axial du manchon d'accouplement (6) est obturé par une paroi frontale (11) du côté de l'extrémité libre de celui-ci, et en ce que l'extrémité (5) du rotor est en butée contre ladite paroi frontale.

5. Pompe à engrenage selon l'une quelconque des revendications 1 à 4, caractérisée en ce que des moyens de liaison supplémentaires sont prévus pour solidariser l'un à l'autre l'extrémité (5) du rotor et le manchon d'accouplement (6).

6. Pompe à engrenage selon les revendications 4 et 5, caractérisée en ce que les moyens de liaison supplémentaires comprennent au moins une vis (13) traversant la paroi frontale (11) d'extrémité du manchon (6) et vissée axialement dans l'extrémité (5) du rotor en butée contre cette paroi.

7. Pompe à engrenage selon l'une quelconque des revendications 1 à 6, caractérisée en ce que le manchon (6) fait partie intégrante d'un dispositif d'accouplement, notamment d'un dispositif d'accouplement à la cardan (15).

8. Pompe à engrenage selon l'une quelconque des revendications 1 à 7, caractérisée en ce que le manchon (6) est métallique.

**Claims**

1. Gear pump of the Moineau pump type comprising a stator (2) having an axial cavity (3), a helicoidal rotor (4) adapted to rotate in said cavity of the stator by cooperating with it and coupling means to couple the rotor to another rotary member, driving or driven, characterized in that the helicoidal rotor (4) projects axially out of the stator (2) and that the coupling means comprise a rigid and elongated coupling sleeve (6), hollowed by an axial housing (7) whose shape is complementary with that of the helix of the rotor, said sleeve (6) being engaged on and gripping the end (5) of the rotor projecting from the stator.

2. Gear pumping according to claim 1, characterized in that the sleeve is provided with a slot (8) extending radially between the axial housing hollowed in this sleeve and the outer surface of said sleeve, and in that there are provided clamping means (9, 10) tending to bring together the two surfaces which bound said slot so as to grip the sleeve (6) elastically around the end (5) of the rotor.

3. Gear pump according to anyone of claims 1 and 2, characterized in that the sleeve (6) extends over at least one pitch of the helix of the rotor (4).

4. Gear pump according to anyone of claims 1 to 3, characterized in that the axial housing of the coupling sleeve (6) is obturated by a front wall (1) on the side of the free end of the latter, and in that the end (5) of the rotor is in abutment against said front wall.

5. Gear pump according to anyone of claims 1 to 4, characterized in that supplementary connecting means are provided to make fast to one another the end (5) of the rotor and the coupling sleeve (6).

6. Gear pump according to claims 4 and 5, characterized in that the supplementary connecting means comprise at least one screw (13) passing through the front wall (11) of the sleeve end (6) and screwed axially into the end (5) of the rotor in abutment against this wall.

7. Gear pump according to anyone of claims 1 to 6, characterized in that the sleeve (6) forms an integral part of a coupling device, particularly of a cardan coupling device (15).

8. Gear pump according to anyone of claims 1 to 7, characterized in that sleeve (6) is metallic.

**Patentansprüche**

1. Moineau-Schraubenspindelpumpe mit einem mit einem axialen Hohlraum versehenen Stator (2), mit einem schraubenförmigen Rotor (4), der in dem Hohlraum (3) des Stators (2) drehbar angeordnet ist und der mit diesem Hohlraum zusammenwirkt, und mit Kupplungsmitteln, durch die der Rotor (4) mit einem antreibenden oder angetriebenen drehbaren Organ gekuppelt ist, dadurch gekennzeichnet, dass der schraubenförmige Rotor (4) in axialer Richtung aus dem Stator (2) herausragt und dass die Kupplungsmittel eine starre langgestreckte Kupplungsmuffe (6) beinhalten, in der eine axiale Aufnahme (7) vorgesehen ist, deren Form zu der Schraubenform des Rotors (4) komplementär ist, und dass diese Kupplungsmuffe (6) auf dem aus dem Stator herausragenden Endbereich (5) des Rotors (4) aufgebracht und mit diesem verspannt ist.

2. Schraubenspindelpumpe nach Anspruch 1, dadurch gekennzeichnet, dass die Kupplungsmuffe (6) einen Spalt (8) aufweist, der sich radial zwischen der in ihr vorgesehenen axialen Aufnahme (7) und der Aussenseite der Kupplungsmuffe (6) erstreckt, und dass Spannmittel (9, 10) zur gegenseitigen Annäherung der beiden den genannten Spalt (8) begrenzenden Flächen vorgesehen sind, mittels derer die Kupplungsmuffe (6) um den Endbereich (5) des Rotors (4) elastisch verspannbar ist.

3. Schraubenspindelpumpe nach Anspruch 1 oder 2, dadurch gekennzeichnet, dass die Kupplungsmuffe (6) sich über wenigstens eine Ganghöhe des schraubenförmigen Rotors (4) erstreckt.

4. Schraubenspindelpumpe nach einem der Ansprüche 1 bis 3, dadurch gekennzeichnet, dass die axiale Aufnahme der Kupplungsmuffe (6) auf der Seite des freien Endes derselben von einer Stirnwand (11) verschlossen ist und dass der Endbereich (5) des Rotors (4) an dieser Stirnwand (11) zum Anschlag kommt.

5. Schraubenspindelpumpe nach einem der Ansprüche 1 bis 4, dadurch gekennzeichnet, dass Hilfsverbindungsmittel vorgesehen sind, durch die der Endbereich (5) des Rotors (4) und die Kupplungsmuffe (6) fest miteinander verbindbar sind.

6. Schraubenspindelpumpe nach Anspruch 4 und 5, dadurch gekennzeichnet, dass die Hilfsverbindungsmittel zumindest eine Schraube (13) umfassen, die die Stirnwand (11) im Endbereich der Kupplungsmuffe (6) durchdringt und axial in den an dieser Stirnwand anliegenden Endbereich (5) des Rotors (4) eingeschraubt ist.

7. Schraubenspindelpumpe nach einem der Ansprüche 1 bis 6, dadurch gekennzeichnet, dass die Kupplungsmuffe (6) integraler Bestandteil einer Kupplungseinrichtung, insbesondere einer Kardankupplung (15), ist.

8. Schraubenspindelpumpe nach einem der Ansprüche 1 bis 7, dadurch gekennzeichnet, dass die Kupplungsmuffe (6) aus Metall besteht.

# FIG.1.

# FIG.2.